# EUROPEAN PATENT SPECIFICATION

(11) **EP 2 594 358 B1**
(45) Date of publication and mention of the grant of the patent: **10.02.2016**
(21) Application number: 12192222.3
(22) Date of filing: 12.11.2012
(51) Int. Cl.: B27C 9/02

(54) **Machining center with fixed portal for machining wood beams**
Bearbeitungszentrum mit festem Portal zur Bearbeitung von Holzbalken
Centre d'usinage avec portiquel fixe pour l'usinage des poutres en bois

(30) Priority: 18.11.2011 IT PD20110360
(43) Date of publication of application: 22.05.2013
(73) Proprietor: Essetre Holding SpA, 36016 Thiene (VI) (IT)
(72) Inventor: Sella, Andrea, 36035 Marano Vicentino VI (IT)
(74) Representative: Modiano, Micaela Nadia

(56) References cited:
- EP-A1- 0 561 227
- EP-A1- 0 792 719
- EP-A1- 1 810 803
- DE-C1- 19 508 401

## Description

The present invention relates to a machining center with fixed portal for machining wood beams.

Nowadays in the field of machining wood beams, machining centers with fixed portals are known and appreciated, which generally comprise a loading roller conveyor for a beam to be machined, an unloading roller conveyor for the machined beam and a central frame that supports the working tools and the electrical switchboard.

The roller conveyors for loading and unloading are associated with corresponding grabs respectively for loading and unloading, which are adapted to hold the beam in position.

In such conventional machining centers, the roller conveyors for loading and unloading and the central frame form what is called the footing, which thus is divided into three parts.

Such three parts are designed to be mounted at the purchasing user's premises.

Such three parts, each one being made with structural elements that are separate and distinct from the elements that make up the other parts, thus suffer from drawbacks which are linked to inaccurate alignments for example of the guides of the loading and unloading grabs, which are arranged to perform a translational motion at the respective roller conveyors for loading and unloading, as well as inaccurate co-planarity of the roller conveyors themselves, and possible misalignment of the tools mounted on the central frame with respect to the beam being machined, which is held by the grabs between the roller conveyors.

Inaccuracies in the alignment and positioning of such three parts must be eliminated, in order to prevent the risk of such inaccuracies from affecting the quality of machining of the wood beams, and they are thus corrected during the working cycle, with inevitable wastage of time and increase of specialist labor costs.

A machining center of the type described above is disclosed in EP 1 810 803 A1.

The aim of the present invention is to provide a machining center with fixed portal for machining wood beams, which is capable of overcoming the above-mentioned drawbacks of the known art.

Within this aim, an object of the invention is to provide a machining center the parts of which are mutually positioned with greater precision, to the advantage of the quality of machining.

Another object of the invention is to provide a machining center that is simpler to transport and install, without the currently-inevitable on-site adjustments of alignment of the guides and of the roller conveyors, and with less laborious corrections of the position of the tools with respect to the roller conveyors.

Another object of the invention is to provide a machining center that can be used by trained operators without further instruction. Another object of the invention is to provide a machining center that can be made using known systems and technologies.

In accordance with the invention, there is provided a machining center with fixed portal for machining wood beams, as defined in the appended claims.

Further characteristics and advantages of the invention will become more apparent from the description of a preferred, but not exclusive, embodiment of the machining center according to the invention, which is illustrated by way of non-limiting example in the accompanying drawings wherein:

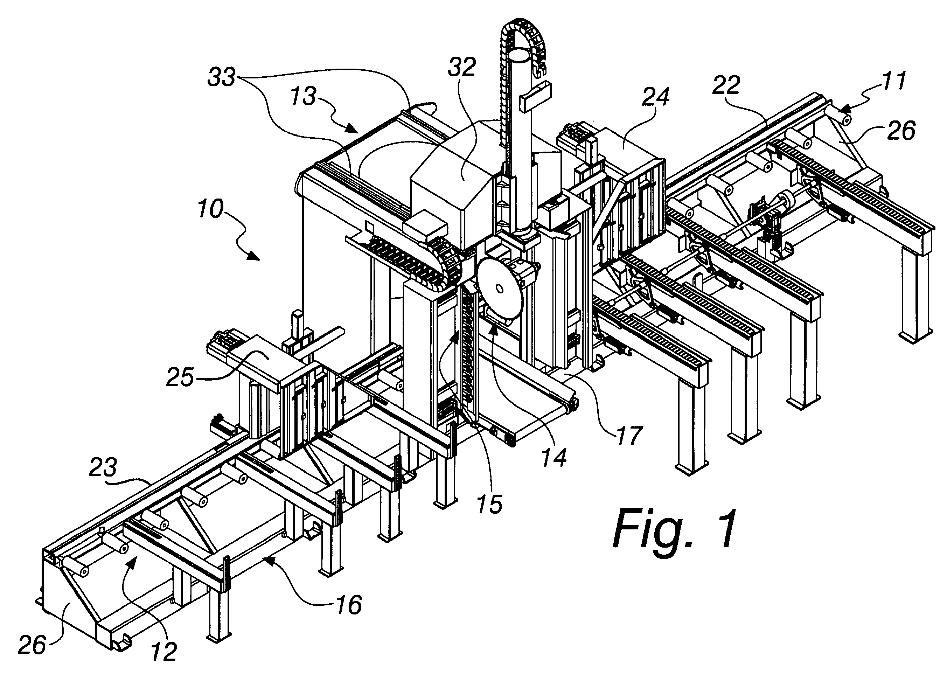

Figure 1 is a perspective view of a machining center according to the invention;
Figure 2 is a perspective view, as in Figure 1, of only the loading roller conveyor, the unloading roller conveyor and the central frame, of a machining center according to the invention;

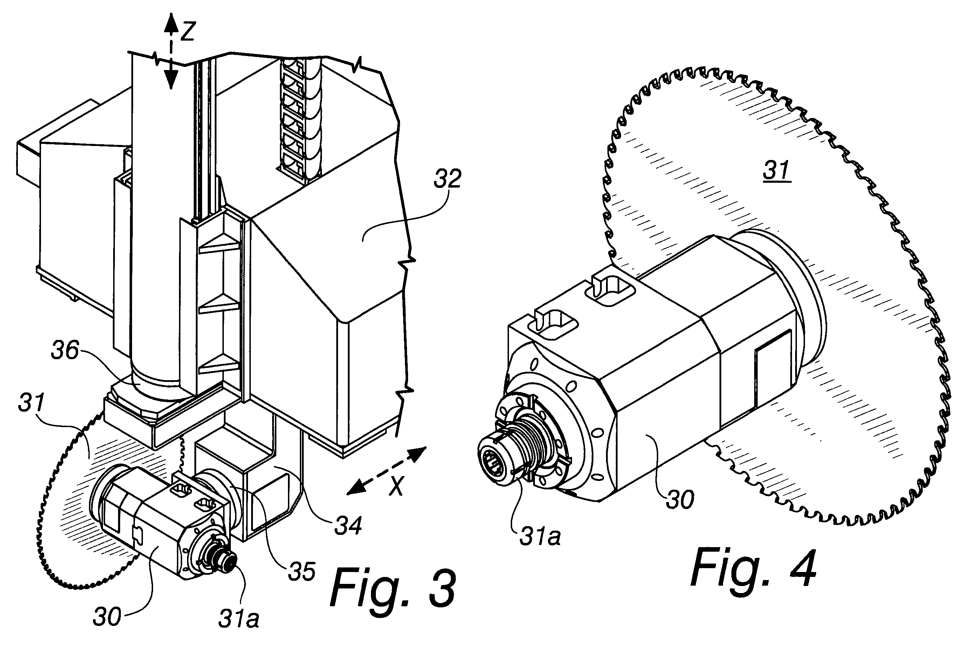

Figure 3 is a perspective view of tools applied to the machining center according to the invention;
Figure 4 is a view of a detail of Figure 3.

With reference to the figures, a machining center with fixed portal for machining wood beams according to the invention is generally designated with the reference numeral 10.

Such machining center 10 comprises a loading roller conveyor 11, an unloading roller conveyor 12 and a central frame 13 that supports the working tools 14, and the corresponding tool store rack 15.

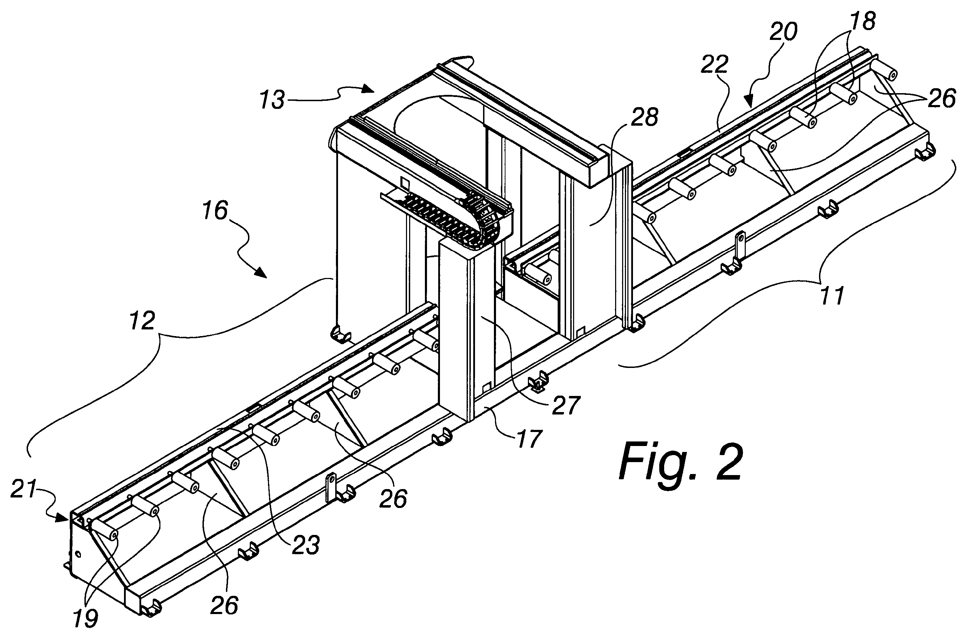

The loading roller conveyor 11, the unloading roller conveyor 12 and the central frame 13 are preassembled so as to form a monolithic footing 16, which can clearly be seen in its entirety in Figure 2.

In the embodiment described herein, which is intended to be by way of non-limiting example of the invention, the monolithic footing 16 has a horizontal structural longitudinal element 17 to which the loading roller conveyor 11, the unloading roller conveyor 12 and the central frame 13 are fixed.

Such structural longitudinal element 17 is formed for example by a tubular profile made of metallic material.

The structural longitudinal element 17 extends over the entire length of the monolithic footing 16 and provides a connection between the supports made of folded metal plate 20, 21 (described below), which form the loading roller conveyor 11 and the unloading roller conveyor 12, and between the central frame 13 and the roller conveyors.

The rollers 18, 19 of the roller conveyors 11, 12 are supported by supports made of folded metal plate, respectively 20 and 21, which also form the guides 22 and 23 for a loading grab 24 and an unloading grab 25.

Such supports made of folded metal plate 20 and 21 are supported and connected to the structural longitudinal element 17 by shoulders 26, which are also made of suitably formed metal plate.

The roller conveyors for loading 11 and unloading 12 are interrupted at the central frame 13, which is also fixed in the front to the structural longitudinal element 17 by front upright elements 27 and 28, so as to allow, as in the known art, passage of the tools.

The monolithic footing 16 thus comprising the structural longitudinal element 17, the supports made of folded metal plate 20 and 21 with the rollers 18 and 19 which form the roller conveyors, the shoulders 26, and the central frame 13, are preassembled so as to form a single block, to be transported whole to the user's premises without being dismantled.

In the present embodiment, the tools 14 comprise an electric spindle 30 with two outlets, a first outlet for a blade, 31, and a second outlet, 31a, for a cutter.

Such electric spindle 30 is supported by a carriage 32 that can perform a translational motion along a first direction X on corresponding rails 33 above the central frame 13, by way of a vertical arm 34 that can perform a vertical translational motion in a second direction Z.

The configuration of the electric spindle 30 is moreover modifiable by way of means 35 and 36 for adjusting the working angles, which should be understood as being of known type.

The electric spindle 30 is provided with an outlet of the cutter type with automatic tool changing of the known type and a blade outlet which is not automatically exchangeable.

Cutter and blade can work independently and not simultaneously so as to be free in terms of peripheral speed and necessity of use.

In practice it has been found that the invention fully achieves the intended aim and objects.

In particular, with the invention a machining center with fixed portal for machining wood beams has been devised the parts of which, i.e. roller conveyors for loading and unloading and central frame that supports the tools, are mutually positioned with greater precision, thanks to the monolithic footing that joins them and of which they are part, to the advantage of the quality of the machining.

What is more, with the invention a machining center has been provided that is simpler to transport and install, since it is a single block, without the currently-inevitable on-site adjustments of alignment of the guides and of the roller conveyors, and with less laborious corrections of the position of the tools with respect to the roller conveyors.

Moreover, with the invention a machining center has been devised that can be used by trained operators without further instruction.

In addition, with the invention a machining center has been devised that can be made using known systems and technologies.

The invention, thus conceived, is susceptible of numerous modifications and variations, within the scope of the appended claims.

In practice the materials employed, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A machining center with fixed portal (10) for machining wood beams, comprising a loading roller conveyor (11), an unloading roller conveyor (12) and a central frame (13) that supports the working tools (14, 15), **characterized in that** said loading roller conveyor (11), said unloading roller conveyor (12) and said central frame (13) are preassembled so as to form a monolithic footing (16) comprising, preassembled so as to form a single block, a horizontal structural longitudinal element (17), supports made of folded metal plate (20, 21) for rollers (18, 19) that form the roller conveyors (11, 12), shoulders (26) for connection between the structural longitudinal element (17) and said supports made of folded metal plate (20, 21), and said central frame (13) fixed to said structural longitudinal element (17) and to said supports (20, 21) made of folded metal plate, said structural longitudinal element (17) extending over the entire length of the monolithic footing (16) and providing a connection between the supports made of folded metal plate (20, 21) which form the loading roller conveyor (11) and the unloading roller conveyor (12), and between said central frame (13) and the roller conveyors, the rollers (18, 19) of the roller conveyors (11, 12) being supported by said supports made of folded metal plate (20, 21), which also form the guides (22, 23) for a loading grab (24) and an unloading grab (25).

2. The machining center according to claim 1, **characterized in that** said structural longitudinal element (17) is constituted by a tubular profile made of metallic material.

3. The machining center according to one or more of the preceding claims, **characterized in that** the tools (14) comprise an electric spindle (30) with two outlets, a first outlet for a blade (31) and a second outlet (31a) for a cutter.

4. The machining center according to claim 3, **characterized in that** said electric spindle (30) is supported by a carriage (32) that can perform a translational motion along a first direction (X) on corresponding rails (33) above the central frame (13), by way of a vertical arm (34) that can perform a vertical translational motion in a second direction (Z).

5. The machining center according to claims 3 and 4, **characterized in that** the configuration of the electric spindle (30) can be modified by means (35, 36) for adjusting the working angles.

6. The machining center according to claims 3 to 4, **characterized in that** said electric spindle (30) is provided with an outlet of the cutter type with automatic tool changing, and a blade outlet which is not automatically exchangeable.

## Patentansprüche

1. Ein Bearbeitungszentrum mit festem Portal (10) zur Bearbeitung von Holzbalken, das einen Verlade-Rollenförderer (11), einen Entlade-Rollenförderer (12) und einen zentralen Rahmen (13) umfasst, der die Bearbeitungswerkzeuge (14, 15) trägt, **dadurch gekennzeichnet, dass** der Verlade-Rollenförderer (11), der Entlade-Rollenförderer (12) und der zentrale Rahmen (13) vormontiert sind, um einen monolithischen Sockel (16) zu bilden, der, vormontiert, um einen einzigen Block zu bilden, Folgendes umfasst: ein horizontales längliches Strukturelement (17), Träger aus Metallfaltwerk (20, 21) für Rollen (18, 19), die die Rollenförderer (11, 12) bilden, Schultern (26) zur Verbindung, zwischen dem länglichen Strukturelement (17) und den Trägern aus Metallfaltwerk (20, 21) und den zentralen Rahmen (13), der an dem länglichen Strukturelement (17) und an den Trägern (20, 21) aus Metallfaltwerk befestigt ist, wobei das längliche Strukturelement (17) sich über die gesamte Länge des monolithischen Sockels (16) erstreckt und eine Verbindung zwischen den Trägern aus Metallfaltwerk (20, 21) herstellt, die den Verlade-Rollenförderer (11) und den Entlade-Rollenförderer (12) bilden, und wobei zwischen dem zentralen Rahmen (13) und den Rollenförderern die Rollen (18, 19) der Rollenförderer (11, 12) von den Trägern aus Metallfaltwerk (20, 21) getragen werden, die auch die Führungen (22, 23) für einen Ladegreifer (24) und einen Entladegreifer (25) bilden.

2. Das Bearbeitungszentrum gemäß Anspruch 1, **dadurch gekennzeichnet, dass** das längliche Strukturelement (17) aus einem rohrförmigen Profil besteht, das aus metallischem Material hergestellt ist.

3. Das Bearbeitungszentrum gemäß einem oder mehreren der obigen Ansprüche, **dadurch gekennzeichnet, dass** die Werkzeuge (14) eine elektrische Spindel (30) mit zwei Ausgängen umfassen, einem ersten Ausgang für eine Klinge (31) und einem zweiten Ausgang (31a) für eine Schneidvorrichtung.

4. Das Bearbeitungszentrum gemäß Anspruch 3, **dadurch gekennzeichnet, dass** die elektrische Spindel (30) von einem Schlitten (32) getragen wird, der eine Translationsbewegung entlang einer ersten Richtung (X) auf entsprechenden Schienen (33) oberhalb des zentralen Rahmens (13) mit Hilfe eines vertikalen Arms (34) durchführen kann, der eine vertikale Translationsbewegung in eine zweite Richtung (Z) ausführen kann.

5. Das Bearbeitungszentrum gemäß Anspruch 3 und 4, **dadurch gekennzeichnet, dass** die Anordnung der elektrischen Spindel (30) durch Mittel (35, 36) zum Einstellen der Arbeitswinkel verändert werden kann.

6. Das Bearbeitungszentrum gemäß Anspruch 3 und 4, **dadurch gekennzeichnet, dass** die elektrische Spindel (30) mit einem Ausgang vom Schneidvorrichtungstyp mit automatischem Werkzeugwechsel und einem Klingenausgang ausgestattet ist, der nicht automatisch austauschbar ist.

## Revendications

1. Centre d'usinage avec portique fixe (10) pour l'usinage de poutres en bois, comprenant un convoyeur à rouleaux de chargement (11), un convoyeur à rouleaux de déchargement (12) et un bâti central (13) qui supporte les outils (14, 15), **caractérisé en ce que** ledit convoyeur à rouleaux de chargement (11), ledit convoyeur à rouleaux de déchargement (12) et ledit bâti central (13) sont préassemblés de manière à former une structure monolithique (16) comprenant, préassemblés de manière à former un bloc unique, un élément longitudinal structurel horizontal (17), des supports en tôle pliée (20, 21) destinés à des rouleaux (18, 19) qui forment les convoyeurs à rouleaux (11, 12), des épaulements (26) pour assurer la liaison entre l'élément longitudinal structurel (17) et lesdits supports en tôle pliée (20, 21), et ledit bâti central (13) fixé audit élément longitudinal structurel (17) et auxdits supports (20, 21) en tôle pliée, ledit élément longitudinal structurel (17) s'étendant sur toute la longueur de la structure monolithique (16) et fournissant une liaison entre les supports en tôle pliée (20, 21) qui forment le convoyeur à rouleaux de chargement (11) et le convoyeur à rouleaux de déchargement (12), et entre ledit bâti central (13) et les convoyeurs à rouleaux, les rouleaux (18, 19) des convoyeurs à rouleaux (11, 12) étant supportés par lesdits supports en tôle pliée (20, 21), qui forment également les guides (22, 23) destinés à un grappin de chargement (24) et un grappin de déchargement (25).

2. Centre d'usinage selon la revendication 1, **caractérisé en ce que** ledit élément longitudinal structurel (17) est constitué d'un profilé tubulaire en matériau métallique.

3. Centre d'usinage selon une ou plusieurs des revendications précédentes, **caractérisé en ce que** les outils (14) comprennent une broche électrique (30) avec deux sorties, une première sortie pour une lame (31) et une seconde sortie (31a) pour un outil de coupe.

4. Centre d'usinage selon la revendication 3, **caractérisé en ce que** ladite broche électrique (30) est supportée par un chariot (32) qui peut réaliser un mouvement translationnel le long d'une première direction (X) sur des rails correspondants (33) au-dessus du bâti central (13), au moyen d'un bras vertical (34) qui peut réaliser une translation verticale dans une seconde direction (Z).

5. Centre d'usinage selon les revendications 3 et 4, **caractérisé en ce que** la configuration de la broche électrique (30) peut être modifiée par des moyens (35, 36) pour régler les angles de travail.

6. Centre d'usinage selon les revendications 3 et 4, **caractérisé en ce que** la configuration de la broche électrique (30) est équipée d'une sortie de type outil de coupe avec changement automatique d'outil, et une sortie de lame sans changement automatique.
